# FASCICULE DE BREVET EUROPEEN

(11) **EP 3 314 209 B1**
(45) Date de publication et mention de la délivrance du brevet: **13.10.2021**
(21) Numéro de dépôt: 16728969.3
(22) Date de dépôt: 14.06.2016
(51) Int. Cl.: G01C 25/00

(54) **SYSTEME INERTIEL DE MESURE POUR AERONEF**
INERTIALMESSUNGSSYSTEM FÜR EIN FLUGZEUG
INERTIAL MEASUREMENT SYSTEM FOR AN AIRCRAFT

(30) Priorité: 23.06.2015 FR 1555758
(43) Date de publication de la demande: 02.05.2018
(73) Titulaire: Safran Electronics & Defense, 75015 Paris (FR)
(72) Inventeur: ROBERFROID, David, 77550 MOISSY-CRAMAYEL (FR); KIEFFER, Jean-François, 77550 MOISSY-CRAMAYEL (FR)
(74) Mandataire: Lavialle, Bruno François Stéphane
(86) Numéro de dépôt international: PCT/EP2016/063649
(87) Numéro de publication internationale: WO 2016/207029

(56) Documents cités:
- FR-A1- 2 901 363
- US-A- 4 914 598
- US-A- 5 410 487
- US-A1- 2011 259 078

## Description

La présente invention concerne la détection inertielle de paramètres de vol d'un aéronef aux fins notamment de commande des surfaces mobiles de vol de l'aéronef. Ces paramètres de vol comportent notamment l'attitude et le vecteur de déplacement de l'aéronef.

### ETAT DE LA TECHNIQUE

Il existe des aéronefs équipés d'un système inertiel de mesure de paramètre de vol, ou ADIRS (de l'anglais « Air Data Inertial Reference System »), comprenant trois centrales inertielles de même type (ADIRU 1, ADIRU 2 et ADIRU 3 ; de l'anglais « Air Data Inertial Reference Unit ») qui comportent chacune un jeu nominal de trois capteurs inertiels angulaires et de trois capteurs inertiels linéaires alignés sur trois axes sensibles d'un repère de mesure. Les centrales inertielles sont reliées à une unité de traitement pour fournir chacune à l'unité de traitement des mesures inertielles qui sont exploitables par l'unité de traitement pour la commande des surfaces mobiles de vol de l'aéronef. Généralement, le système inertiel de mesure est agencé pour que les mesures de l'ADIRU 1 soient présentées au pilote, les mesures de l'ADIRU 2 soient présentées au copilote et les mesures de l'ADIRU 3, qui est utilisée comme une unité redondante, puissent être présentées soit au pilote soit au copilote en cas de défaillance de l'ADIRU 1 ou de l'ADIRU 2 respectivement. Pour détecter une telle défaillance, l'unité de traitement compare en permanence les mesures des trois centrales inertielles les unes aux autres pour s'assurer de leur cohérence entre elles. Lorsque les mesures fournies par l'une des centrales inertielles s'écartent des mesures fournies par les deux autres centrales inertielles, ladite centrale inertielle est déclarée défaillante par l'unité de traitement.

Un problème se pose lorsqu'il ne reste plus que deux centrales inertielles et que leurs mesures se mettent à diverger car il n'est pas possible de déterminer quelle centrale inertielle est défaillante sans recourir à d'autres instruments de mesure.

Il est connu du document FR-A-2901363 décrit un système de mesure inertielle comprenant trois centrales inertielles comprenant chacune trois capteurs angulaires et trois capteurs linéaires disposés selon trois axes sensibles. Cet agencement assure donc une redondance et est, qui plus est, hybridé avec un dispositif de positionnement par satellites. Un tel système, s'il peut être considéré comme plus sécurisant, est cependant relativement onéreux.

Le document US-A-5410487 décrit une centrale inertielle à quatre axes sensibles et les combinaisons des mesures selon ces axes à des fins de redondance.

### OBJET DE L'INVENTION

Un but de l'invention est de fournir un moyen permettant de faciliter la détermination d'une défaillance dans un système inertiel de mesure.

### BREF EXPOSE DE L'INVENTION

A cet effet, on prévoit, selon l'invention, un système de mesure inertielle pour aéronef, comprenant au moins une unité de traitement reliée à au moins deux centrales inertielles, à savoir au moins une centrale inertielle d'un premier type comportant au moins trois capteurs angulaires et trois capteurs linéaires alignés sur trois axes sensibles distincts, et une centrale inertielle d'un deuxième type comportant au moins quatre capteurs angulaires et quatre capteurs linéaires alignés sur quatre axes sensibles distincts. L'unité de traitement est agencée pour recevoir une donnée inertielle à partir des mesures fournies par les six capteurs de la centrale inertielles du premier type et quatre données inertielles à partir de quatre combinaisons distinctes de trois capteurs angulaires et de trois capteurs linéaires sélectionnés parmi les capteurs de la centrale inertielle du deuxième type. L'unité de traitement est en outre agencée pour comparer entre elles les quatre données inertielles issues des mesures de la centrale inertielle du deuxième type de manière à déterminer si la centrale inertielle du deuxième type est défaillante.

Ainsi, la présence de quatre capteurs angulaires et de quatre capteurs linéaires dans la centrale inertielle de deuxième type permet d'obtenir quatre données inertielles (par exemple l'attitude de l'aéronef) pour le calcul desquelles ont été tour à tour exclus un des quatre capteurs linéaires et un des quatre capteurs angulaires. Si tous les capteurs fonctionnent correctement, les données inertielles calculées à partir des mesures de la centrale inertielle de deuxième type sont sensiblement identiques. Dans ce cas, un écart entre la donnée inertielle issue des mesures de la centrale inertielle de premier type et les données inertielles issues de la centrale inertielle de deuxième type révélerait une défaillance de la centrale inertielle de premier type. Si l'un au moins des capteurs de la centrale inertielle de deuxième type est défaillant, les quatre données inertielles ne seront pas affectées de la même manière par cette défaillance de sorte que les données inertielles issues des mesures de la centrale inertielle de deuxième type vont diverger. La détection d'une telle divergence permet donc de révéler la défaillance.

D'autres caractéristiques et avantages de l'invention ressortiront à la lecture de la description qui suit de modes de réalisation particuliers non limitatifs de l'invention.

### BREVE DESCRIPTION DES FIGURES

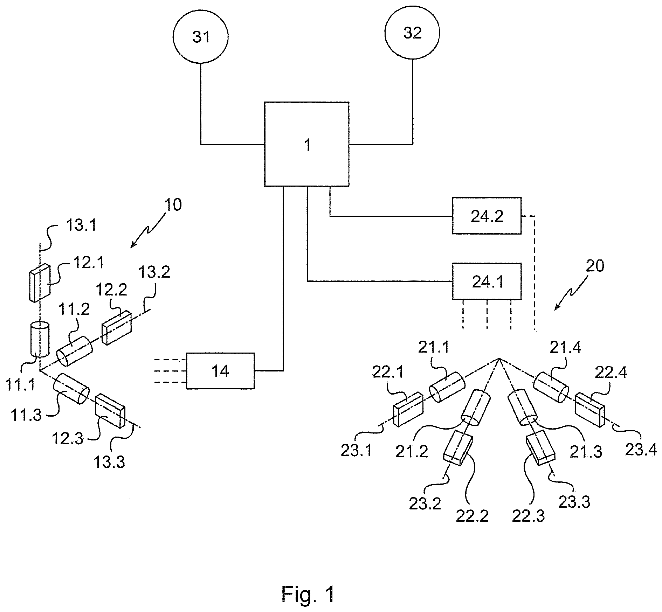

Il sera fait référence à la figure unique annexée représentant schématiquement un système selon l'invention.

### DESCRIPTION DETAILLEE DE L'INVENTION

Le système de mesure inertielle selon l'invention est ici décrit en application à un aéronef piloté par un pilote et un copilote et est agencé pour fournir respectivement au pilote et au copilote des données inertielles calculées à partir des données inertielles de deux centrales inertielles distinctes. D'autres applications sont bien entendu possibles.

Ce système inertiel comprend une unité de traitement 1 reliée à deux centrales inertielles, à savoir une centrale inertielle 10 d'un premier type et une centrale inertielle 20 d'un deuxième type. Le système de mesure inertielle de l'invention est monté sur l'aéronef et est relié à une première unité de pilotage 31 présentant de façon connue en soi des paramètres de vol au pilote de l'aéronef et à une deuxième unité de pilotage 32 présentant de façon connue en soi des paramètres de vol au copilote de l'aéronef. Ces paramètres de vol sont ici affichés sur un écran de chaque unité de pilotage 31, 32. Le système de mesure inertielle est également relié à un calculateur d'assistance au pilotage de l'aéronef, un tel calculateur étant connu en lui-même.

La centrale inertielle 10 comporte ici trois capteurs angulaires 11 et trois capteurs linéaires 12 alignés sur trois axes sensibles 13 distincts (les capteurs et les axes sont ici repérés individuellement au moyen des indices 1, 2, 3 associés respectivement aux références 11, 12 et 13). Les trois axes sensibles 13 sont perpendiculaires les uns aux autres. La centrale inertielle 10 comporte un circuit de commande 14 des capteurs 11, 12. Le circuit de commande 14 est agencé pour récupérer des signaux de mesure émanant des capteurs 11, 12 et pour transmettre, à l'unité de traitement 1, ces signaux de mesure ou des signaux représentatifs des signaux de mesure. Dans le cas où au moins l'un des capteurs 11, 12 nécessite d'être excité pour fonctionner, le circuit de commande 14 est agencé pour envoyer audit capteur des signaux d'excitation. Les capteurs angulaires 11 sont ici des gyromètres à résonateur vibrant et les capteurs linéaires 12 sont ici des accéléromètres à résonateur vibrant. Le circuit de commande 14 est donc agencé pour exciter les capteurs angulaires 11 et les capteurs linéaires 12. La centrale inertielle 10 est agencée pour calculer une donnée inertielle à partir des trois capteurs angulaires 11 et trois capteurs linéaires 12.

La centrale inertielle 20 comporte ici quatre capteurs angulaires 21 et quatre capteurs linéaires 22 alignés sur quatre axes sensibles 23 distincts (les capteurs et les axes sont ici repérés individuellement au moyen des indices 1, 2, 3, 4 associés respectivement aux références 21, 22 et 23). Les quatre axes sensibles 23 forment les diagonales d'un cube. La centrale inertielle 20 comporte en outre un premier circuit de commande 24.1 d'un premier jeu de capteurs comprenant les capteurs angulaires 21.1, 21.2, 21.3 et les capteurs linéaires 22.1, 22.2, 22.3 et un deuxième circuit de commande 24.2 d'un deuxième jeu de capteurs comprenant le capteur angulaire 21.4 et le capteur linéaire 22.4. Dans le cas où au moins l'un des capteurs 21, 22 nécessite d'être excité pour fonctionner, le circuit de commande 24.1, 24.2 est agencé pour envoyer audit capteur des signaux d'excitation. Les capteurs angulaires 21 sont ici des gyromètres à résonateur vibrant et les capteurs linéaires 22 sont ici des accéléromètres à résonateur vibrant. Le circuit de commande 24 est donc agencé pour exciter les capteurs angulaires 21 et les capteurs linéaires 22.

La centrale inertielle 20 est agencée pour calculer quatre données inertielles à partir de quatre combinaisons distinctes de trois capteurs angulaires et de trois capteurs linéaires sélectionnés parmi les capteurs 21, 22, au moyen d'un algorithme différent de celui utilisé dans la centrale inertielle 10. Chaque donnée inertielle comprend une attitude de l'aéronef et un vecteur de déplacement de l'aéronef. Ces quatre données inertielles sont transmises à l'unité de traitement 1.

L'unité de traitement 1 transmet à la première unité de pilotage 31 la donnée inertielle calculée à partir des mesures fournies par les six capteurs 11 et 12 (cette donnée inertielle est appelée dans la suite première donnée inertielle principale), et l'unité de traitement 1 transmet à la deuxième unité de pilotage 32 la donnée inertielle calculée à partir des mesures fournies par les six capteurs 21.1, 21.2, 21.3 et 22.1, 22.2, 22.3 (cette donnée inertielle est appelée dans la suite deuxième donnée inertielle principale).

Préalablement à la transmission des données inertielles principales aux unités de pilotage 31, 32, l'unité de traitement 1 compare entre elles la première donnée inertielle principale et la deuxième donnée inertielle principale calculées à chaque instant. Si la première donnée inertielle principale et la deuxième donnée inertielle principale calculées à un instant sont identiques ou présentent entre elles un écart inférieur à un seuil prédéterminé (tenant compte de la précision attendue des données inertielles calculées), les données inertielles principales sont transmises aux unités de pilotage 31, 32.

Si la première donnée inertielle principale et la deuxième donnée inertielle principale calculées à un instant présentent entre elles un écart supérieur au seuil prédéterminé, l'unité de traitement 1 compare entre elles les données suivantes :
- la deuxième donnée inertielle principale,
- la donnée inertielle calculée, au même instant que la deuxième donnée inertielle principale, à partir des mesures fournies par les six capteurs 21.1, 21.2, 21.4 et 22.1, 22.2, 22.4 (cette donnée inertielle est appelée première donnée inertielle additionnelle),

- la donnée inertielle calculée, au même instant que la deuxième donnée inertielle principale, à partir des mesures fournies par les six capteurs 21.1, 21.4, 21.3 et 22.1, 22.4, 22.3 (cette donnée inertielle est appelée deuxième donnée inertielle additionnelle),
- la donnée inertielle calculée, au même instant que la deuxième donnée inertielle principale, à partir des mesures fournies par les six capteurs 21.4, 21.2, 21.3 et 22.4, 22.2, 22.3 (cette donnée inertielle est appelée troisième donnée inertielle additionnelle).

Si les données inertielles additionnelles et la deuxième donnée inertielle principale convergent (elles sont identiques ou l'écart entre elles est inférieur au seuil prédéterminé), l'unité de traitement 1 transmet un signal d'alerte aux unités de pilotage 31, 32 informant que la première unité inertielle 10 est défaillante et que seule la deuxième donnée inertielle principale sera désormais présentée au pilote et au copilote.

Si les données inertielles additionnelles et la deuxième donnée inertielle principale divergent (l'écart entre elles est supérieur au seuil prédéterminé), l'unité de traitement 1 transmet un signal d'alerte aux unités de pilotage 31, 32 informant que la deuxième unité inertielle 20 est défaillante et que seule la première donnée inertielle principale sera désormais présentée au pilote et au copilote.

Dans le premier cas, il est possible de maintenir une comparaison des données inertielles additionnelles et de la deuxième donnée inertielle principale pour détecter une défaillance de la deuxième unité inertielle 20.

L'unité de traitement 1 est ainsi agencée pour calculer un écart entre la donnée inertielle issue des mesures de la première centrale inertielle et l'une des données inertielles issues de la deuxième centrale inertielle et émettre une alerte lorsque l'écart est supérieur à une valeur prédéterminée.

On comprend que la comparaison des données inertielles permet d'en vérifier l'homogénéité et la cohérence, et donc de vérifier l'intégrité des mesures inertielles des centrales inertielles et le bon fonctionnement des centrales inertielles et de leurs capteurs.

Bien entendu, l'invention n'est pas limitée aux modes de réalisation décrits mais englobe toute variante entrant dans le champ de l'invention telle que définie par les revendications.

En particulier, les centrales inertielles peuvent comprendre plus de capteurs angulaires et plus de capteurs linéaires que dans l'exemple décrit.

Le système peut comprendre plusieurs unités de traitement.

Le système peut comprendre plus de centrales inertielles. Par exemple, on peut avoir deux centrales inertielles de premier type dont les mesures sont exploitées pour fournir deux données inertielles.

L'invention est applicable à tout type d'algorithme, par exemple de type ARS ou AHRS avec une stabilisation des attitudes par des mesures accélérométriques, avec ou sans la vitesse air, pour la centrale inertielle de deuxième type.

L'invention est applicable à des mesures purement inertielles ou des mesures hybrides comportant des mesures inertielles et des mesures d'un autre type, par exemple des mesures de géolocalisation par satellite ou des mesures issues d'un magnétomètre.

La centrale inertielle de deuxième type peut comprendre un unique circuit de commande pour commander tous les capteurs de la centrale ou comprendre deux circuits de commande pour qu'un des circuits de commande soit associé à une partie des capteurs de la centrale inertielle de deuxième type et que l'autre des circuits de commande soit associé à l'autre partie des capteurs de la centrale inertielle de deuxième type. Idéalement, un des circuits de commande est associé à six des capteurs de la centrale inertielle de deuxième type (trois des capteurs angulaires et trois des capteurs linéaires) et l'autre des circuits de commande est associé aux deux autres des capteurs de la centrale inertielle de deuxième type. Les circuits de commande sont, de préférence dans ce cas, de technologies différentes.

En variante, les axes sensibles des capteurs de la centrale inertielle de deuxième type peuvent comprendre trois axes coïncidant avec trois axes canoniques et un axe disposé selon une trisectrice de ces trois axes.

## Revendications

1. Système de mesure inertielle pour aéronef, comprenant au moins une unité de traitement reliée à au moins deux centrales inertielles, **caractérisé en ce que** les deux centrales comprennent au moins une centrale inertielle de premier type comportant au moins trois capteurs angulaires et trois capteurs linéaires alignés sur trois axes sensibles distincts, et une centrale inertielle de deuxième type, comportant au moins quatre capteurs angulaires et quatre capteurs linéaires alignés sur quatre axes sensibles distincts, le système étant agencé pour calculer une donnée inertielle à partir des six capteurs de la centrale inertielle de premier type et quatre données inertielles à partir de quatre combinaisons distinctes de trois capteurs angulaires et de trois capteurs linéaires sélectionnés parmi les capteurs de la centrale inertielle de deuxième type et l'unité de traitement étant agencée pour :
- comparer entre elles les quatre données inertielles issues des mesures de la centrale inertielle de deuxième type de manière à déterminer si la centrale inertielle de deuxième type est défaillante ;
- comparer l'une des données inertielles issues des mesures de la centrale inertielle de deuxième type et la donnée inertielle issue des mesures de la centrale inertielle de premier type.

2. Système selon la revendication 1, les quatre données inertielles issues des mesures de la centrale inertielle de deuxième type sont calculées au moyen d'un même algorithme.

3. Système selon la revendication 1, dans lequel la centrale inertielle de deuxième type comporte un premier circuit de commande d'un premier jeu de capteurs comprenant trois des capteurs angulaires et trois des capteurs linéaires et un deuxième circuit de commande d'un deuxième jeu de capteurs comprenant le quatrième capteur angulaire et le quatrième capteur linéaire.

4. Système selon la revendication 1, dans lequel l'unité de traitement est agencée pour calculer un écart entre la donnée inertielle issue des mesures de la centrale inertielle de premier type et l'une des données inertielles issues de la centrale inertielle de deuxième type et émettre une alerte lorsque l'écart est supérieur à une valeur prédéterminée.

5. Système selon la revendication 1, dans lequel les axes de sensibilité des capteurs de la centrale inertielle de deuxième type comprennent trois axes coïncidant avec trois axes canoniques et un axe disposé selon une trisectrice de ces trois axes.

6. Système selon la revendication 1, dans lequel les axes de sensibilité des capteurs de la centrale inertielle de deuxième type sont alignés sur des diagonales d'un cube.

## Patentansprüche

1. Inertialmesssystem für ein Luftfahrzeug, umfassend mindestens eine Verarbeitungseinheit, die mit mindestens zwei inertialen Messeinheiten verbunden ist, **dadurch gekennzeichnet, dass** die beiden Messeinheiten mindestens eine inertiale Messeinheit vom ersten Typ umfassen, die mindestens drei Winkelsensoren und drei Linearsensoren umfasst, die auf drei verschiedene empfindliche Achsen ausgerichtet sind, und eine inertiale Messeinheit vom zweiten Typ, die mindestens vier Winkelsensoren und vier Linearsensoren umfasst, die auf vier verschiedene empfindliche Achsen ausgerichtet sind, wobei das System ausgebildet ist, um ein inertiales Datenelement anhand der sechs Sensoren der inertialen Messeinheit vom ersten Typ und vier inertiale Datenelemente anhand von vier verschiedenen Kombinationen aus drei Winkelsensoren und drei Linearsensoren zu berechnen, die unter den Sensoren der inertialen Messeinheit vom zweiten Typ ausgewählt werden, und wobei die Verarbeitungseinheit ausgebildet ist, um:
- die vier inertialen Datenelemente, die aus den Messungen der inertialen Messeinheit vom zweiten Typ stammen, miteinander zu vergleichen, um zu bestimmen, ob die inertiale Messeinheit vom zweiten Typ funktionsunfähig ist;
- eines der inertialen Datenelemente, die aus den Messungen der inertialen Messeinheit vom zweiten Typ stammen, und das inertiale Datenelement, das aus den Messungen der inertialen Messeinheit vom ersten Typ stammt, zu vergleichen.

2. System nach Anspruch 1, bei dem die vier inertialen Datenelemente, die aus den Messungen der inertialen Messeinheit vom zweiten Typ stammen, mittels eines gleichen Algorithmus berechnet werden.

3. System nach Anspruch 1, bei dem die inertiale Messeinheit vom zweiten Typ einen ersten Steuerkreis zum Steuern eines ersten Sensorsatzes umfasst, der drei Winkelsensoren und drei Linearsensoren umfasst, sowie einen zweiten Steuerkreis zum Steuern eines zweiten Sensorsatzes, der den vierten Winkelsensor und den vierten Linearsensor umfasst.

4. System nach Anspruch 1, bei dem eine Verarbeitungseinheit ausgebildet ist, um einen Unterschied zwischen dem inertialen Datenelement, das aus den Messungen der inertialen Messeinheit vom ersten Typ stammt, und einem der inertialen Datenelemente, die aus der inertialen Messeinheit vom zweiten Typ stammen, zu berechnen und einen Alarm zu senden, wenn der Unterschied größer als ein vorbestimmter Wert ist.

5. System nach Anspruch 1, bei dem die Empfindlichkeitsachsen der Sensoren der inertialen Messeinheit vom zweiten Typ drei Achsen umfassen, die mit drei kanonischen Achsen zusammenfallen, sowie eine Achse, die gemäß einer Trisektrix dieser drei Achsen angeordnet ist.

6. System nach Anspruch 1, bei dem die Empfindlichkeitsachsen der Sensoren der inertialen Messeinheit vom zweiten Typ auf Diagonalen eines Würfels ausgerichtet sind.

## Claims

1. An inertial measurement system for aircraft, the system comprising at least one processor unit connected to at least two inertial units, **characterized in that** the two inertial units comprise at least one inertial unit of a first type having at least three angular sensors and three linear sensors aligned on three substantially distinct sensing axes, and an inertial unit of a second type comprising at least four angular sensors and four linear sensors aligned on four substantially distinct sensing axes, the system being arranged to calculate one piece of inertial data from the six sensors of the inertial unit of the first type and four pieces of inertial data from four distinct combinations of three angular sensors and three linear sensors selected from the sensors of the inertial unit of the second type, and the processor unit being arranged to :
- compare the four pieces of inertial data from the measurements of the inertial unit of the second type with one another so as to determine whether the inertial unit of the second type has failed;
- compare one of the inertial data from the measurements of the inertial unit of the second type with the inertial data from the measurements of the inertial unit of the first type.

2. A system according to claim 1, the four pieces of inertial data from the measurements of the inertial unit of the second type are calculated by means of the same algorithm.

3. A system according to claim 1, wherein the inertial unit of the second type includes a first control circuit for controlling a first set of sensors comprising three angular sensors and three linear sensors, and a second control circuit for controlling a second set of sensors comprising the fourth angular sensor and the fourth linear sensor.

4. A system according to claim 1, wherein the processor unit is arranged to calculate a difference between the pieces of inertial data derived from the measurements of the inertial unit of the first type and any one of the pieces of inertial data derived from the inertial unit of the second type and to issue an alert when the difference is greater than a predetermined value.

5. A system according to claim 1, wherein the sensing axes of the sensors of the inertial unit of the second type comprise three axes coinciding with three canonical axes together with an axis arranged on a trisector of these three axes.

6. A system according to claim 1, wherein the sensing axes of the sensors of the inertial unit of the second type are aligned on diagonals of a cube.
